# EUROPEAN PATENT APPLICATION

(11) **EP 2 284 783 A1**
(43) Date of publication of application: **16.02.2011**
(21) Application number: 10008235.3
(22) Date of filing: 06.08.2010
(51) Int. Cl.: G06Q 20/00, G07F 7/08

(54) **Electronic wallet device**

(30) Priority: 12.08.2009 CN 200920170119 U
(71) Applicant: Phytrex Technology Corporation, Xinyi Dist T'ai pei (TW)
(72) Inventor: Hsiao, Feng-Chi, Taipei 110 (TW); Yang, Kun-Shan, Taipei 110 (TW); Lin, Tung-Fu, Taipei 110 (TW); Cheng, Chin-Fen, Taipei 110 (TW); Lee, Chih-Wei, Taipei 110 (TW)
(74) Representative: UEXKÜLL & STOLBERG

(57) **Abstract**

The present invention provides an electronic wallet device for a mobile phone comprising a SIM card interface, comprising: a processing unit configured to provide a top-up service interface to the mobile phone and to receive and convert a first transaction instruction from the mobile phone into a top-up instruction; an authentication unit provided with an electronic wallet and configured to receive and convert the top-up instruction into an authorized top-up instruction and to write an amount to the electronic wallet according to the authorized top-up instruction; and an NFC antenna electrically connected to the authentication unit.

## Description

### BACKGROUND OF THE INVENTION

### FIELD OF THE INVENTION

The present invention relates to an electronic wallet device applicable to a subscriber identify module (SIM), and more particularly, to the technical field regarding mobile phones to enhance ease of use.

### DESCRIPTION OF THE PRIOR ART

Integrated Circuit Cards (IC Card) are used in all existing electronic payment systems to serve as carriers for electronic wallets. An electronic wallet is operable by storing the available balance in a chip embedded in an IC card, then the user can make any payment using the IC card through which an amount of purchase is subtracted.

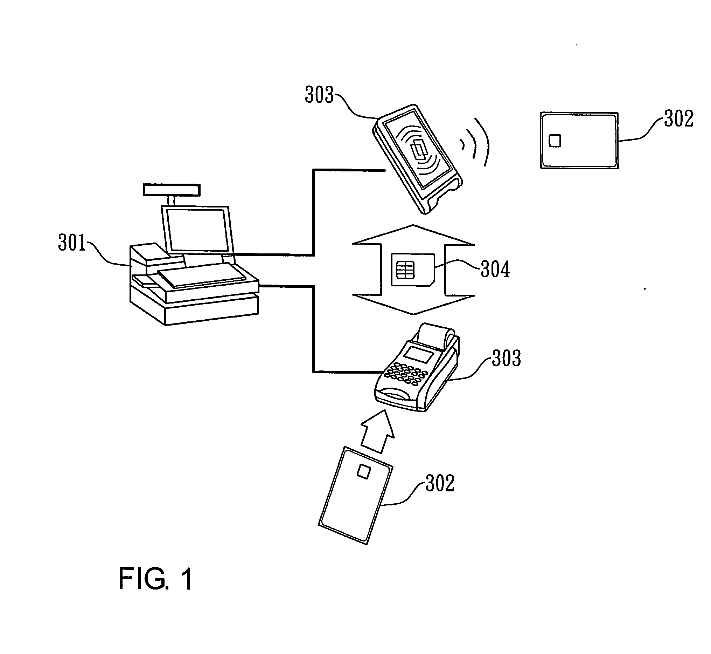

Fig. 1 is a schematic view of a conventional electronic wallet topped up with cash. The user has to go to a shop where there is a cash register 301 (POS) capable of adding the top-up cash to the electronic wallet. Upon arrival at the shop, the user may hand an IC card 302 and the top-up cash to a salesclerk. The salesclerk inserts the IC card 302 into a card reader 303 equipped with a security access module (SAM) card 304, and the interface between the card reader 303 and the IC card 302 is of an insertion type or an inductive type. The salesclerk operates a software interface on the cash register 301 and enters a required transaction-related parameter according to the amount of cash received. The software installed in the cash register 301 converts the transaction-related parameter into a top-up instruction and sends the top-up instruction to the card reader 303. The card reader 303 then converts the received top-up instruction into an authorized top-up instruction by means of SAM software installed therein and sends the authorized top-up instruction to the IC card 302. With an electronic wallet program installed in the IC card 302, the amount indicated by the authorized top-up instruction is written to the electronic wallet in the IC card 302.

According to the prior art, the top-up service for electronic wallet users is available only in certain places, and the authorized top-up can be processed only through a specific device, such as the card reader 303, and in cash only. As the way the electronic wallet functions makes it inconvenient to check the balance (the inquiry must be made through the card reader 303), the user may be embarrassed to find the balance insufficient when s/he wants to conduct a transaction. Under such circumstance, the user will be unable to continue the transaction using the electronic wallet unless s/he finds a specific place for authorized top-up.

According to the statistics released by the National Communications Commission (NCC), there were approximately 24,680,000 registered mobile phone users in Taiwan by the end of June in 2008, indicating that everyone in the country had more than one mobile phone. The phenomenal popularity of mobile phones in Asia indicates that the mobile phone has become an essential device for both personal and professional use. While some may use the mobile phone to take photos and listen to music, the majority of mobile phone users simply use the gadget to make/receive phone calls and send/receive messages.

As the integration of an electronic wallet into a mobile phone is industrially applicable, the present invention provides an electronic wallet device for a mobile phone, thereby to enhance the ease of authorized top-up for electronic wallets.

### SUMMARY OF THE INVENTION

The present invention provides an electronic wallet device for a mobile phone, thereby to enhance the ease of top-up for electronic wallets.

In order to achieve the aforementioned object, the present invention provides an electronic wallet device for a mobile phone comprising a SIM card interface, comprising: a processing unit configured to provide a top-up service interface to the mobile phone and to receive and convert a first transaction instruction from the mobile phone into a top-up instruction; an authentication unit provided with an electronic wallet and configured to receive and convert the top-up instruction into an authorized top-up instruction and to write an amount to the electronic wallet according to the authorized top-up instruction; and an antenna electrically connected to the authentication unit.

In order to achieve the aforementioned object, the electronic wallet device further comprises a film substrate. The film substrate is constructed having one side surface provided with a first contact interface and the other side surface provided with a second contact interface which is in electrical contact with the SIM card interface, and the processing unit, the authentication unit and the antenna are disposed thereon.

In the electronic wallet device that achieves the aforementioned object, the processing unit is implemented in the software or hardware of the mobile phone; the authentication unit is implemented in a SD card (secure digital memory card) and the mobile phone comprises a SD card interface; and the antenna is disposed in the mobile phone.

In the electronic wallet device that achieves the aforementioned object, the processing unit and the authentication unit are implemented in a SIM card; the antenna is disposed in the mobile phone and electrically connected to the SIM card via the SIM card interface.

The first contact interface is configured to electrically contact a SIM card.

The side surface of the film substrate on which the first contact interface is disposed is adhered to one side surface of a SIM card, and the first contact interface is in electrical contact with the SIM card.

The processing unit comprises an operating module. The operating module converts the first transaction instruction into the top-up instruction.

The processing unit comprises an operating module. The operating module provides the top-up service interface displayed on a display unit of the mobile phone.

The authentication unit is authenticated by a financial institution.

The authentication unit comprises an authorization module. The authorization module converts the top-up instruction into the authorized top-up instruction.

The authentication unit comprises an authorization module. The authorization module executes a SAM algorithm authenticated by a financial institution.

The authentication unit comprises an electronic wallet module. The electronic wallet module writes the amount to the electronic wallet.

The electronic wallet is a memory. The memory is configured to store the amount.

The processing unit receives and converts a second transaction instruction from the mobile phone into a debit instruction.

The authentication unit receives and converts the debit instruction into an authorized debit instruction, and subtracts an amount from the balance of the electronic wallet according to the authorized debit instruction.

The electronic wallet device implemented according to the present invention is integrated into a mobile phone comprising a keyboard interface. The keyboard interface enables prompt balance inquiry of the electronic wallet and real-time authorized top-up. Then, the mobile phone sends, by its communication capacity, the amount of authorized top-up to a billing system for creating a bill.

### BRIEF DESCRIPTION OF THE DRAWINGS

Fig. 1 is a schematic view of a conventional electronic wallet topped up with cash;

Fig. 2 is a block diagram of an electronic wallet device in accordance with a first embodiment of the present invention;

Fig. 3A is a structural layout showing one side of the electronic wallet device in accordance with the first embodiment of the present invention;

Fig. 3B is a structural layout showing the other side of the electronic wallet device in accordance with the first embodiment of the present invention;

Fig. 4 is a block diagram of an electronic wallet device in accordance with a second embodiment of the present invention; and

Fig. 5 is a block diagram of an electronic wallet device in accordance with a third embodiment of the present invention.

### DETAILED DESCRIPTION OF THE EMBODIMENTS

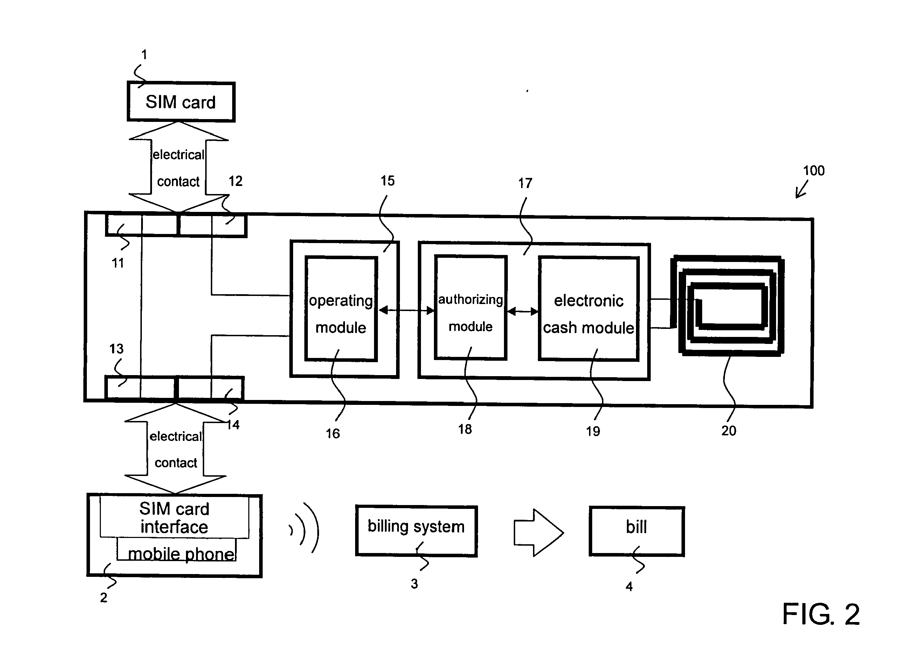

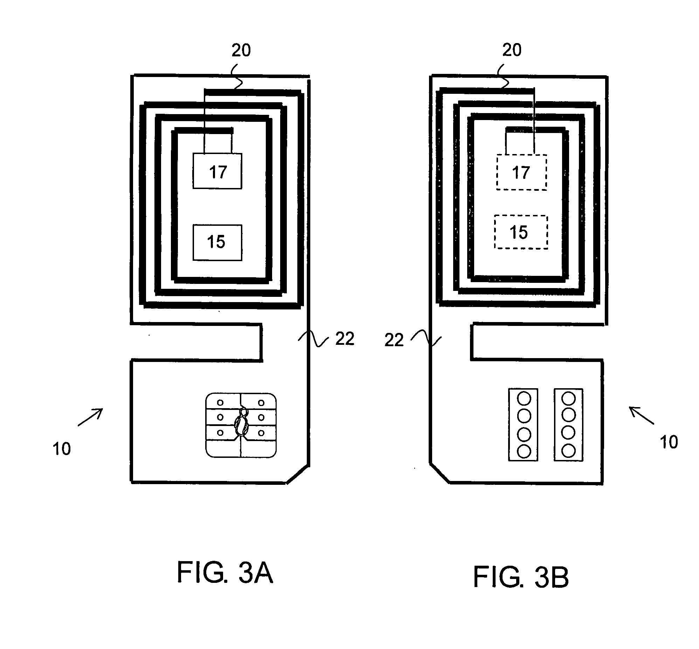

Fig. 2 is a block diagram of an electronic wallet device 100 in accordance with a first embodiment of the present invention. The electronic wallet device 100 is used in a mobile phone 2 comprising a SIM card interface, so as to integrate value-added services to the mobile phone 2. Fig. 3A is a structural layout showing one side of the electronic wallet device 100 in accordance with the first embodiment of the present invention. The electronic wallet device 100 comprises a film substrate 10, a processing unit 15, an authentication unit 17 and an NFC antenna 20, wherein the processing unit 15, the authentication unit 17 and the antenna 20 are disposed on the film substrate 10.

In this embodiment, the film substrate 10 is constructed having one side surface provided with a first contact interface and the other side surface provided with a second contact interface. The first contact interface is configured to electrically contact a plurality of electrical contacts of a SIM card 1 while the second contact interface is configured to electrically contact the SIM card interface of the mobile phone 2. The first contact interface comprises at least a first contact 11 and a second contact 12, and the second contact interface comprises at least a third contact 13 and a fourth contact 14, wherein the first contact 11 and the third contact 13 are electrically connected while the second contact 12 and the fourth contact 14 are each electrically connected to the processing unit 15.

In this embodiment, each of the first contact interface and the second contact interface of the film substrate 10 comprises eight contacts (C 1.Vcc, C 2.RST, C 3.CLK, C 4.RFU, C 5.GND, C 6.Vpp, C 7.I/O, and C 8.RFU) that meet ISO 7816 international standards, and the contacts of the first contact interface and the second contact interface correspond in position to each other. C 1.Vcc and C 5.GND of the first contact interface may be regarded as the first contact 11 while C 7.I/O may be regarded as the second contact 12. C 1.Vcc and C 5.GND of the second contact interface may be regarded as the third contact 13 while C 7.I/O may be regarded as the fourth contact 14. In one preferred embodiment of the present invention, certain area of the side surface of the film substrate 10 on which the first contact interface is disposed is coated with an adhesive material so that the side surface can be adhered to the side surface of the SIM card 1 on which a plurality of electrical contacts are disposed.

The processing unit 15 comprises an operating module 16. The operating module 16 provides, via SIM Toolkit (STK) of the mobile phone 2, a top-up service interface displayed on a display unit of the mobile phone 2. The user operates the top-up service interface to enable the mobile phone 2 to send a first transaction instruction to the operating module 16. After receiving the first transaction instruction, the operating module 16 converts the first transaction instruction into a top-up instruction.

The authentication unit 17 authenticated by a financial institution has an electronic wallet. Moreover, the authentication unit 17, which is configured to receive the top-up instruction, comprises an authorization module 18 and an electronic wallet module 19. The authorization module 18 executes a SAM algorithm authenticated by the financial institution, so as to convert the top-up instruction into an authorized top-up instruction. The electronic wallet module 19 then writes an amount to the electronic wallet according to the authorized top-up instruction. The electronic wallet is a memory configured to store the amount. After the authentication unit 17 has completed the top-up process, the authentication unit 17 sends a top-up complete instruction to the processing unit 15. The processing unit 15 then generates a billing instruction according to the top-up complete instruction. The billing instruction is sent to the mobile phone 2 via the second contact interface so as to be transmitted to a billing system 3. In the embodiments of the present invention, the billing system 3 is attributed to a financial institution or attributed to a mobile telecommunication system of the mobile phone 2. The billing system 3 creates a bill 4 in which the amount is stated according to the billing instruction, and the user may make the payment by cash or by automatic debit.

Figs. 3A and 3B are structural layouts showing two sides of the film substrate 10 of the electronic wallet device in accordance with the first embodiment of the present invention, respectively. The film substrate 10 comprises a first substrate, a second substrate and a connecting portion 22 for connecting the first substrate and the second substrate. The first contact interface and the second contact interface are disposed on two sides of the first substrate, respectively. The processing unit 15, the authentication unit 17 and the antenna 20 are preferably, but not limited to be, disposed on one side surface of the second substrate, and the antenna 20 is electrically connected to the authentication unit 17. Alternatively, the processing unit 15, the authentication unit 17 and the antenna 20 may be disposed on the other side surface of the second substrate of the film substrate 10, or arranged across the first and second substrates, or disposed on an intermediate layer sandwiched between the first and second substrates.

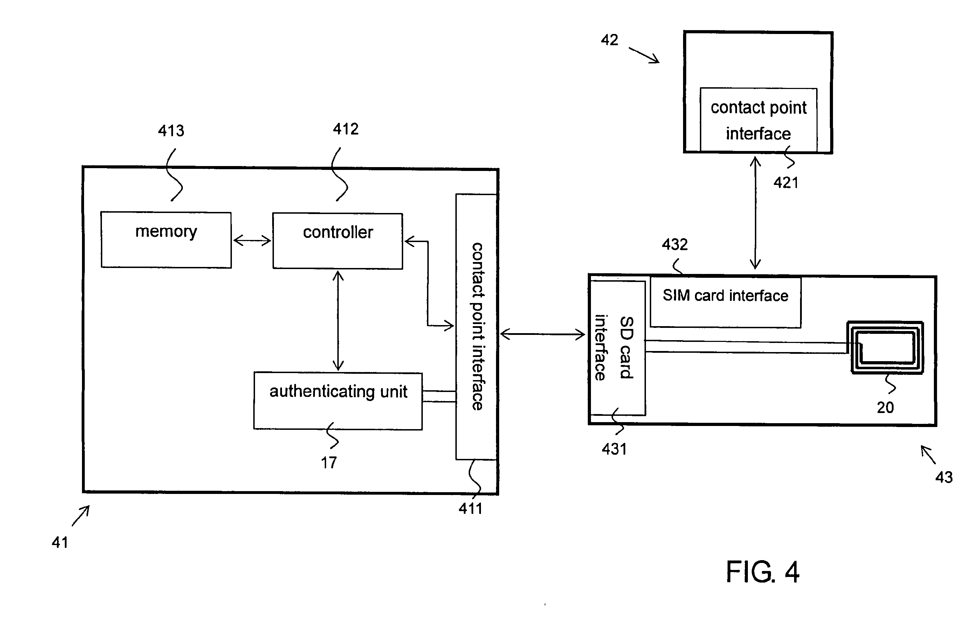

Fig. 4 is a block diagram of an electronic wallet device in accordance with a second embodiment of the present invention. A mobile phone 43 comprises a SIM card interface 432, a SD card (secure digital memory card) interface 431 and an NFC antenna 20, wherein the SIM card interface 432 is electrically connected to a contact interface 421 of a SIM card 42, the SD card interface 431 is electrically connected to a contact interface 411 of a SD card 41, and the antenna 20 is electrically connected to the SD card interface 431. In this embodiment, the processing unit is implemented by means of implementation software or hardware of the mobile phone 43. The processing unit comprises an operating module that provides a top-up service interface displayed on a display unit of the mobile phone 43. The user operates the top-up service interface to enable the mobile phone 43 to receive a first transaction instruction, and then the operating module receives and converts the first transaction instruction into a top-up instruction.

In this embodiment, the SD card 41 comprises the contact interface 411, a controller 412, the authentication unit 17 and a memory 413, wherein the controller 412 is electrically connected to the contact interface 411, the memory 413 and the authentication unit 17, and the authentication unit 17 is electrically connected to the contact interface 411 so that the authentication unit 17 may be electrically connected to the antenna 20 via the contact interface 411 and the SD card interface 431. A driver of the controller 412 assesses any instruction transmitted from the SD card interface 431. If the driver of the controller 412 determines that an instruction is intended for the authentication unit 17, the instruction will be sent to and processed by the authentication unit 17. Then, the authentication unit 17 sends the processed result to the mobile phone 43 via the controller 412. The authentication unit 17 authenticated by a financial institution has an electronic wallet. Moreover, the authentication unit 17, which is configured to receive the top-up instruction from the mobile phone 43, comprises an authorization module and an electronic wallet module. The authorization module executes a SAM algorithm authenticated by the financial institution, so as to convert the top-up instruction into an authorized top-up instruction. The electronic wallet module then writes an amount to the electronic wallet according to the authorized top-up instruction. The electronic wallet is a memory configured to store the amount.

After the authentication unit 17 has completed the top-up process, the authenticating unit 17 sends a top-up complete instruction to the processing unit of the mobile phone 43. The processing unit then generates a billing instruction according to the top-up complete instruction. The billing instruction is sent to the mobile phone 43 so as to be transmitted to a billing system. In the embodiments of the present invention, the billing system is attributed to a financial institution or attributed to a mobile telecommunication system of the mobile phone 43. The billing system creates a bill in which the amount is stated according to the billing instruction, and the user may make the payment by cash or by automatic debit.

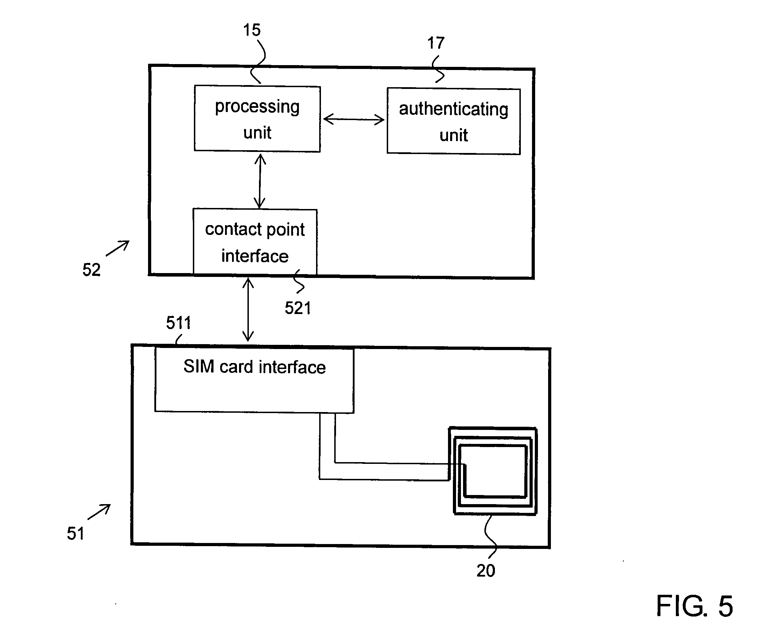

Fig. 5 is a block diagram of an electronic wallet device in accordance with a third embodiment of the present invention. A mobile phone 51 comprises an NFC antenna 20 and a SIM card interface 511. A SIM card 52 comprises a contact interface 521 electrically connected to the SIM card interface 511, a processing unit 15 and an authentication unit 17, wherein the processing unit 15 is electrically connected to the authentication unit 17 and the contact interface 521. The processing unit 15 comprises an operating module. The operating module provides, via SIM Toolkit (STK) of the mobile phone 51, a top-up service interface displayed on a display unit of the mobile phone 51. The user operates the top-up service interface to enable the mobile phone 51 to send a first transaction instruction to the operating module. After receiving the first transaction instruction, the operating module converts the first transaction instruction into a top-up instruction. The authentication unit 17 authenticated by a financial institution has an electronic wallet. Moreover, the authentication unit 17, which is configured to receive the top-up instruction, comprises an authorization module and an electronic wallet module. The authorization module executes a SAM algorithm authenticated by the financial institution to convert the top-up instruction into an authorized top-up instruction. The electronic wallet module then writes an amount to the electronic wallet according to the authorized top-up instruction. The electronic wallet is a memory configured to store the amount.

After the authentication unit 17 has completed the top-up process, the authentication unit 17 sends a top-up complete instruction to the processing unit. The processing unit then generates a billing instruction according to the top-up complete instruction. The billing instruction is sent to the mobile phone 51 so as to be transmitted to a billing system. In the embodiments of the present invention, the billing system is attributed to a financial institution or attributed to a mobile telecommunication system of the mobile phone 51. The billing system creates a bill in which the amount is stated according to the billing instruction, and the user may make the payment by cash or by automatic debit.

When the user conducts a transaction using the electronic wallet device of the present invention, the authentication unit 17 inductively receives a transaction instruction from a card reader via the antenna 20 and converts the transaction instruction into an authorized transaction instruction. Then, the electronic wallet module subtracts an amount from the electronic wallet according to the authorized transaction instruction. Alternatively, when the user makes a transfer or transaction using the electronic wallet device of the present invention, the user enters a second transaction instruction into a mobile phone, and then the processing unit 15 receives and converts the second transaction instruction from the mobile phone into a debit instruction. Afterward, the authentication unit 17 receives and converts the debit instruction into an authorized debit instruction, and subtracts an amount from the balance of the electronic wallet according to the authorized debit instruction.

With the detailed description of the preferred embodiments of the present invention, it will be apparent to those skilled in the art that various modifications and variations can be made to the present invention without departing from the spirit and scope of the present invention. The embodiments depicted above are not intended as limitations but rather as examples of the present invention.

## Claims

1. An electronic wallet device for a mobile phone comprising a SIM card interface, comprising:
a processing unit configured to provide a top-up service interface to the mobile phone and to receive and convert a first transaction instruction from the mobile phone into a top-up instruction;
an authentication unit provided with an electronic wallet and configured to receive and convert the top-up instruction into an authorized top-up instruction and to write an amount to the electronic wallet according to the authorized top-up instruction; and
an antenna electrically connected to the authentication unit.

2. The electronic wallet device according to claim 1 further comprising a film substrate having one side surface provided with a first contact interface and the other side surface provided with a second contact interface in electrical contact with the SIM card interface, wherein the processing unit, the authentication unit and the antenna are disposed on the film substrate.

3. The electronic wallet device according to claim 1, wherein the processing unit is implemented in the mobile phone and the authentication unit in a SD card (secure digital memory card), and wherein the antenna is disposed in the mobile phone comprising a SD card interface.

4. The electronic wallet device according to claim 1, wherein the processing unit and the authentication unit are implemented in a SIM card, and wherein the antenna is disposed in the mobile phone and electrically connected to the SIM card via the SIM card interface.

5. The electronic wallet device according to claim 2, wherein the first contact interface is configured to electrically contact a SIM card.

6. The electronic wallet device according to claim 2, wherein the side surface of the film substrate on which the first contact interface is disposed is adhered to one side surface of a SIM card, and wherein the first contact interface electrically contacts the SIM card.

7. The electronic wallet device according to claim 1, wherein the processing unit comprises an operating module configured to convert the first transaction instruction into the top-up instruction.

8. The electronic wallet device according to claim 1, wherein the processing unit comprises an operating module configured to provide the top-up service interface displayed on a display unit of the mobile phone.

9. The electronic wallet device according to claim 1, wherein the authentication unit is authenticated by a financial institution.

10. The electronic wallet device according to claim 1, wherein the authentication unit comprises an authorization module configured to convert the top-up instruction into the authorized top-up instruction.

11. The electronic wallet device according to claim 1, wherein the authentication unit comprises an authorization module configured to execute a SAM algorithm authenticated by a financial institution.

12. The electronic wallet device according to claim 1, wherein the authentication unit comprises an electronic wallet module configured to write the amount to the electronic wallet.

13. The electronic wallet device according to claim 1, wherein the electronic wallet is a memory configured to store the amount.

14. The electronic wallet device according to claim 1, wherein the processing unit receives and converts a second transaction instruction from the mobile phone into a debit instruction.

15. The electronic wallet device according to claim 14, wherein the authentication unit receives and converts the debit instruction into an authorized debit instruction, and subtracts an amount from the balance of the electronic wallet according to the authorized debit instruction.
